# EUROPEAN PATENT APPLICATION

(11) **EP 2 551 014 A1**
(43) Date of publication of application: **30.01.2013**
(21) Application number: 10848439.5
(22) Date of filing: 24.03.2010
(51) Int. Cl.: B01J 23/58, B01J 33/00, F01N 3/08, F01N 3/10

(54) **CATALYST FOR PURIFICATION OF EXHAUST GAS**

(71) Applicant: Toyota Jidosha Kabushiki Kaisha, Toyota-shi, Aichi 471-8571 (JP)
(72) Inventor: SHINMYO, Yusuke, Toyota-shi Aichi 471-8571 (JP); TAKAGI, Nobuyuki, Toyota-shi Aichi 471-8571 (JP); MATSUBARA, Hiroyuki, Toyota-shi Aichi 471-8571 (JP); IMAI, Hiroto, Kakegawa-shi Shizuoka 437-1492 (JP); KAMADA, Masaya, Toyota-shi Aichi 471-8571 (JP)
(74) Representative: Winter, Brandl, Fürniss, Hübner, Röss, Kaiser, Polte - Partnerschaft
(86) International application number: PCT/JP2010/055774
(87) International publication number: WO 2011/118047

(57) **Abstract**

The present invention provides an exhaust gas purification catalyst which has a structure which prevents competitive adsorption of HC, CO, and NO_{X} and enables effective utilization of an NO_{X} storage reduction type catalyst. The exhaust gas purification catalyst of the present invention is characterized by having an NO_{X} storage reduction type catalyst layer which contains at least one type of NO_{X} storage material which is selected from an alkali metal or an alkali earth metal and Pt and/or Rh on a substrate and having an oxidation catalyst layer which carries Pt and/or Pd on the NO_{X} storage reduction type catalyst layer.

## Description

### Technical Field

The present invention relates to an exhaust gas purification catalyst, more particularly relates to an exhaust gas purification catalyst which is provided with an NOₓ storage reduction type catalyst layer.

### Background Art

In the past, in three-way catalysts, NOₓ storage reduction type catalysts have suffered from competitive adsorption of HC, CO, and NOₓ, so it has been difficult to secure sufficient purification performance.

To solve this, Japanese Patent Publication No. 2009-101252 A1 etc. report NOₓ storage reduction type catalysts which have two-layer coated structures, but both the upper and lower layers contain an NOₓ storage material (or NOₓ holding substance), so the problems that competitive adsorption of HC, CO, and NOₓ occurs, the active points of the NOₓ storage reduction reaction end up decreasing, and an NOₓ storage reduction type catalyst cannot be effectively formed went unresolved.

### Summary of Invention

The present invention has as its object the provision of an exhaust gas purification catalyst which has a structure which prevents competitive adsorption of HC, CO, and NOₓ and enables effective utilization of an NOₓ storage reduction type catalyst.

To achieve the above object, the exhaust gas purification catalyst of the present invention is characterized by:
having an NOₓ storage reduction type catalyst layer which contains at least one type of NOₓ storage material which is selected from an alkali metal or an alkali earth metal and Pt and/or Rh on a substrate and
having an oxidation catalyst layer which carries Pt and/or Pd on the NOₓ storage reduction type catalyst layer.

In a preferred embodiment, seen in the direction of flow of exhaust gas, the oxidation catalyst layer has a length of 25 to 60% of the length of the NOₓ storage reduction type catalyst layer.

In a preferred embodiment, the oxidation catalyst layer has a thickness of 20 to 40 µm.

### Brief Description of Drawings

FIG. 1 schematically show HC, CO, and NOₓ which suffer from competitive adsorption at an NOₓ storage reduction type catalyst layer in a conventional exhaust gas purification catalyst.
FIG. 2 schematically shows an exhaust gas purification catalyst of the present invention in a state where HC and CO are selectively oxidized at the upper layer oxidation catalyst layer and NOₓ is selectively stored and reduced at the lower layer NOₓ storage reduction type catalyst layer.
FIG. 3A is a schematic view which shows an image of composition of catalysts of invention examples and comparative examples for laboratory evaluation use and FIG. 3B is a schematic view which shows an image of composition of catalysts of invention examples for actual evaluation use.
FIG. 4 is a graph which shows a test cycle for laboratory evaluation.
FIG. 5 is a graph which shows an NOₓ storage characteristic in the laboratory for catalysts of invention examples and comparative examples.
FIG. 6 is a graph which shows NOₓ storage characteristics in an actual machine for catalysts of invention examples.

### Description of Embodiments

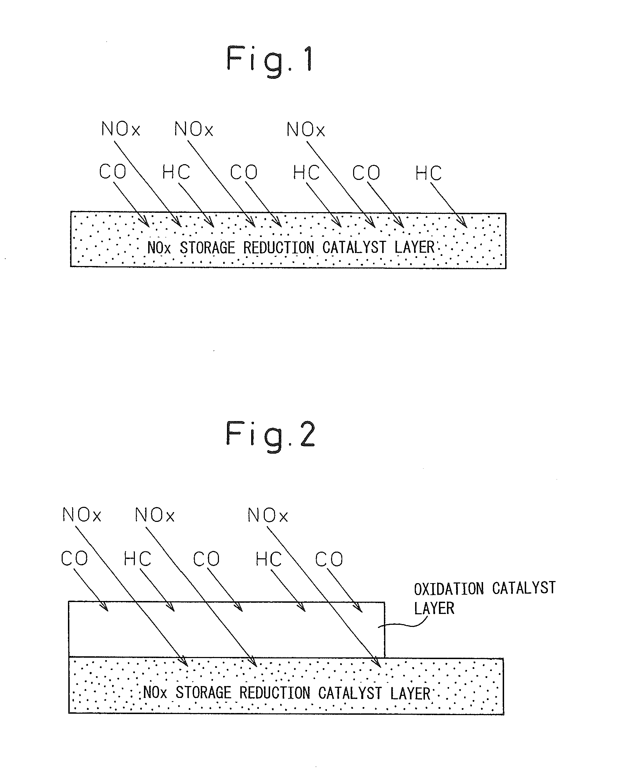

In a conventional two-layer coat structure, both the upper and lower layers are NOₓ storage reduction type catalyst layers, so, as shown in FIG. 1, competitive adsorption of HC, CO, and NOₓ ends up occurring, the active points of NOₓ storage reduction reactions are reduced, and the NOₓ storage reduction type catalyst layer can be effectively utilized. That is, even if the NOₓ storage reduction type catalyst has a sufficient NOₓ storage capacity, the NOₓ storage speed at the stage of the start of storage is slow and, with mode emission, sufficient performance could not be exhibited. Further, as a measure, even if arranging an oxidation catalyst upstream of the NOₓ storage reduction type catalyst, when compared with the same capacity, again the NOₓ storage speed was slow.

As opposed to this, as a characterizing feature of the present invention, as shown in FIG. 2, first, HC and CO are substantially removed at the upper layer oxidation catalyst layer, so the active points of the lower layer NOₓ storage reduction type catalyst layer can be effectively utilized for the NOₓ storage reduction reaction.

The present invention can provide an oxidation catalyst layer on an NOₓ storage reduction type catalyst layer so as to enable effective utilization of the lower layer NOₓ storage reduction type catalyst layer. That is, the upper layer oxidation catalyst layer through which the exhaust gas first passes selectively oxidizes the HC (hydrocarbons) and CO (carbon monoxide) which inhibit the reaction of the NOₓ storage reduction type catalyst. Therefore, in the lower layer NOₓ storage reduction type catalyst layer, competitive adsorption of HC, CO, and NOₓ substantially does not occur. Storage and reduction of NOₓ which passes through the upper layer oxidation catalyst layer selectively occurs.

In the exhaust gas purification catalyst of the present invention, by selectively causing action of the upper layer oxidation catalyst layer and the lower layer NOₓ storage reduction type catalyst layer, it is possible to avoid competitive adsorption of the HC and CO which should be removed by oxidation and NOₓ which should be removed by reduction, secure sufficient reaction sites, and enable maximum utilization of the inherent functions of the NOₓ storage reduction type catalyst.

In one preferable embodiment, as shown in FIG. 2, the oxidation catalyst layer is arranged along the direction of flow of the exhaust gas from the upstream side end of the NOₓ storage reduction type catalyst layer so as to cover 25 to 60% of the length of the NOₓ storage reduction type catalyst layer. In this range, the NOₓ storage speed of the NOₓ storage reduction type catalyst layer becomes the greatest.

Further, in one preferable embodiment, the thickness of the oxidation catalyst layer is 20 to 40 µm. In this range, the NOₓ storage rate of the NOₓ storage reduction type catalyst layer becomes maximum.

After the lower layer NOₓ storage reduction type catalyst layer is formed, the upper layer oxidation catalyst layer is overcoated on it to form a catalyst of a vertical two-layer coat structure.

The oxidation catalyst layer which is overcoated on the upper layer is raised in oxidation performance by being provided with Pt and/or Pd which has excellent catalyst ability as an oxidation catalyst.

The oxidation catalyst layer does not have Rh inhibiting the catalyst activity in lean combustion gas added to it, while does not have an NOₓ storage material which affects the previous metal activity added to it either.

The NOₓ storage reduction type catalyst layer includes Pt and/or Rh and an NOₓ storage material. In particular, Rh and the NOₓ storage material are also added to only the lower layer NOₓ storage reduction type catalyst layer.

### Examples

Three types of exhaust gas purification catalysts which have the coat specifications which are shown in Table 1 on cordierite substrates were prepared. Below, DOC indicates an oxidation catalyst layer, while NSR indicates a NOₓ storage reduction type catalyst layer.

**Table 1**

| Name | Coat specifications | |
|---|---|---|
| [1] DOC (Comp. ex.) | Coat: Al₂O₃=150 *Unit: g/liter Precious metal: Pt/Pd=1.2/0.6 *Unit: g/liter | |
| | Oxidation catalyst layer (upper layer) | NOₓ storage reduction type catalyst layer (lower layer) |
| [2] NSR (Comp. ex.) | None | Coat: CeO₂•Al₂O₃=120, ZrO₂•TiO₂=100 |
| | | ZrO₂-CaO=50 *Unit: g/liter |
| | | Precious metal: Pt/Rh=2.0/0.45 |
| | | *Unit: g/liter |
| | | Storage material: Ba/Li/K=0.1/0.2/0.1 |
| | | *Unit: mol/liter |
| [3] Overcoat NSR (Inv. ex.) | Coat: Al₂O₃ | Same as above |
| | *Coat amount differs by length | |
| | Precious metal: Pt/Pd=1.2/0.6 | |
| | *Unit: g/liter | |
| | Coat ratio: 27, 55, 82% | |
| | Coat thickness: 30±10 µm | |

Each invention example was prepared by forming an NOₓ storage reduction type catalyst layer (NSR) on a substrate, then coating an oxidation catalyst layer (DOC) on the same.

The catalyst size was, for laboratory use, a volume of 35 cc (total length 50 mm) and for actual use, a volume of 14 liters (total length 110 mm).

Each catalyst was tested for simple durability in an electric furnace at 700°C x 27 hours.

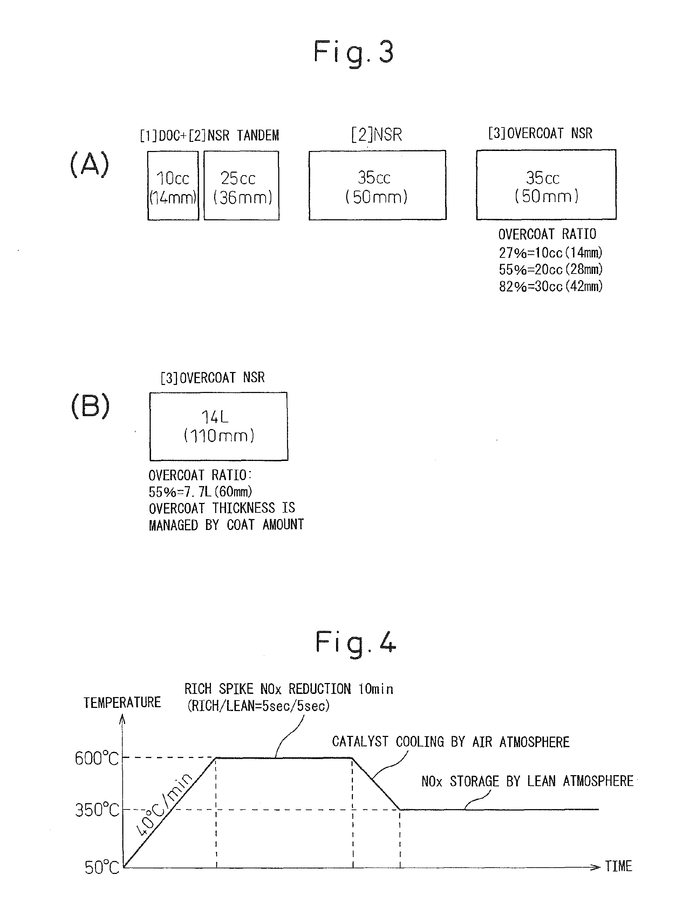

Three types of catalysts of the coat specifications of Table 1 were used for tests under the following conditions. The images of composition are shown in FIG. 3.

### <Configuration of Test Catalysts>

### (A) Configurations for Laboratory Evaluation Use (Three Types)

[1] DOC+[2]NSR: Tandem Configuration (Comparative Example)

| | |
|---|---|
| Size: | DOC volume 10 cc, length 14 mm (upstream side) |
| | NSR volume 25 cc, length 36 mm (downstream side) |
| | (Total length 50 mm) |

[2] NSR: Alone (Comparative Example)

| | |
|---|---|
| Size: | Volume 35 cc, length (total length) 50 mm |

[3] Overcoat of DOC on NSR (Invention Example)

| | |
|---|---|
| Size: | Volume 35 cc, length (total length) 50 mm |
| Overcoat ratio: | 27%=10 cc (14 mm(*)) |
| | 55%=20 cc (28 mm(*)) |
| | 82%=30 cc (42 mm(*)) |

| | |
|---|---|
| (*) Length from upstream side end of NSR | |

### (B) Configuration for Actual Evaluation Use (One Type)

[3] Overcoat of DOC on NSR (Invention Example)

| | |
|---|---|
| Size: | volume 14 liter, length 110 mm |
| Overcoat ratio: | 55%=7.7 liter (60 mm (*)) |

| | |
|---|---|
| (*) Length from upstream side end of NSR | |

The test conditions were as follows:

### <Test Conditions>

### (A) Laboratory NOₓ Storage Test

Test gas conditions: Shown in Table 2.

**Table 2**

| | CO₂ | O₂ | NO | C₃H₆ | H₂O | Total flow rate |
|---|---|---|---|---|---|---|
| Lean atmosphere | 10% | 10% | 100 ppm | 300 ppmC | 10% | 20 liter/min (N₂ balance) |
| Rich atmosphere | 10% | 1% | 100 ppm | 10000 ppmC | 10% | 20 liter/min (N₂ balance) |

Test cycle: Shown in FIG. 4.

That is, the catalyst was raised from the initial temperature of 50°C to 600°C by 40°C/min. At 600°C, rich spike NOₓ reduction (rich/lean=5 sec/5 sec) was performed, then the catalyst was immediately cooled in an argon atmosphere down to 350°C where NOₓ storage was performed in a lean atmosphere.

### (B) Actual NOₓ Storage Test

Evaluation engine: Diesel engine (exhaust amount: 2.2 liters)

Engine conditions: Shown in Table 3.

**Table 3**

| Speed | Catalyst entry temperature | Ga | Inflowing NO_{X} | Inflowing THC |
|---|---|---|---|---|
| 2000rpm | 370°C | 35 g/sec | 100 ppm | 135 ppmC |

Evaluation pattern: PM regeneration→saturated NO_{X} storage amount measurement

### <Test Results>

### (A) Verification of Overcoat Ratio

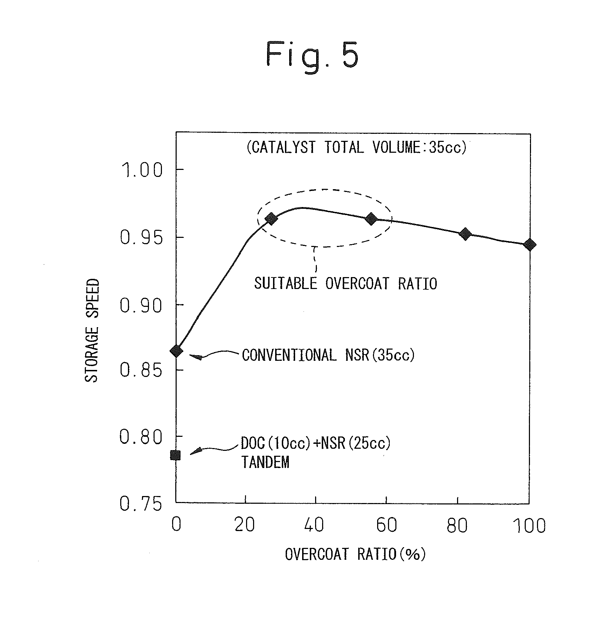

FIG. 5 shows all together the results of the laboratory NO_{X} storage test.

According to the present invention, by overcoating DOC on the NSR, the NO_{X} storage speed is remarkably improved compared with the conventional NSR alone and DOC/NSR in tandem.

Further, the NO_{X} storage speed becomes the highest in the range of 25 to 60% of the NSR length of the lower layer of the overcoat ratio.

### (B) Verification of Coat Thickness

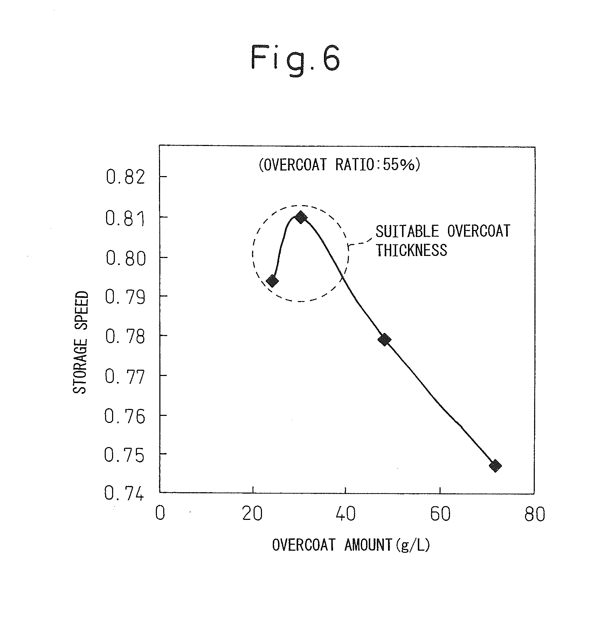

FIG. 6 shows all together the results of the actual NO_{X} storage test. The overcoat ratio was 55% (fixed), while the overcoat amount was changed in the range of 24 to 72 g/liter.

When the overcoat amount was near 30 g/liter, the NO_{X} storage speed was the highest. The optimum overcoat amount is in the range of 25 to 35 g/liter centered about 30 g/liter. If converting this to the overcoat thickness with respect to an overcoat ratio of 55%, the optimum overcoat thickness is 20 to 40 µm or so.

### Industrial Applicability

According to the present invention, there is provided an exhaust gas purification catalyst which has a structure which prevents competitive adsorption of HC, CO, and NO_{X} and enables effective utilization of an NO_{X} storage reduction type catalyst.

## Claims

1. An exhaust gas purification catalyst **characterized by**
having an NO_{X} storage reduction type catalyst layer which contains at least one type of NO_{X} storage material which is selected from an alkali metal or an alkali earth metal and Pt and/or Rh on a substrate and
having an oxidation catalyst layer which carries Pt and/or Pd on said NO_{X} storage reduction type catalyst layer.

2. An exhaust gas purification catalyst as set forth in claim 1, wherein said oxidation catalyst layer covers 25 to 60% of the length of said NO_{X} storage reduction type catalyst layer from an upstream side end of said NO_{X} storage reduction type catalyst layer along the direction of flow of the exhaust gas.

3. An exhaust gas purification catalyst as set forth in claim 1 or 2, wherein said oxidation catalyst layer has a thickness of 20 to 40 µm.
